Europäisches Patentamt

(19)  European Patent Office

Office européen des brevets

(11)  EP 0 936 530 A1

## (12)  EUROPEAN PATENT APPLICATION

(43)  Date of publication:
18.08.1999  Bulletin 1999/33

(51)  Int. Cl.⁶: **G06F 1/00**

(21)  Application number: **98710001.3**

(22)  Date of filing: **16.02.1998**

(84)  Designated Contracting States:
**AT BE CH DE DK ES FI FR GB GR IE IT LI LU MC NL PT SE**
Designated Extension States:
**AL LT LV MK RO SI**

(71)  Applicant:
**Siemens Nixdorf
Informationssysteme AG
33106 Paderborn (DE)**

(72)  Inventor: **Benson, Glen
81739 München (DE)**

(74)  Representative:
**Epping, Wilhelm, Dr.-Ing. et al
Patentanwalt
Postfach 22 13 17
80503 München (DE)**

(54)  **Virtual smart card**

(57)  Smart card technology is in the process of emerging as a fundamental advance in computer security. A Virtual Smart Card emulates a real smart card by providing an identical interface and services. However, a Virtual Smart Card has no physical manifestation any smart card-aware application can seamlessly interoperate with either a real smart card or a Virtual Smart Card. A Virtual Smart Card Sever or a duplication-protected physical media communicates with the Virtual Smart Card in order to activate or to deactivate the Virtual Smart Card.

Fig 15

Fig 1

## Description

The invention deals with Smart Card technology. This technology is in the process of emerging as a fundamental advance in computer security. As smart cards become commonplace, computer users will enjoy the full benefits of cryptographic services without worrying about keeping the confidentiality of their cryptographic keys.

Background to the Invention

Duplication Protected Media

A media is said to be duplication-protected if it is exceedingly difficult for an unauthorized person to build an exact duplicate. Examples of duplication-protected media are smart cards, Dongles, and non-reproducable CD's, Optical Media Authenticity Verification: DiscGuard™, [http://www.ttr.co.il/discgard.htm].

A Dongle in the past was a piece of hardware which can be connected to a Personal Computer PC. Those Dongles can be substituted by means described in the Patent application EP97710011.4.A Dongle has an encryption key called the DongleKey. It is exceedingly difficult to attack a Dongle and extract the DongleKey. For this reason, it is exceedingly difficult to build an exact copy of a Dongle.

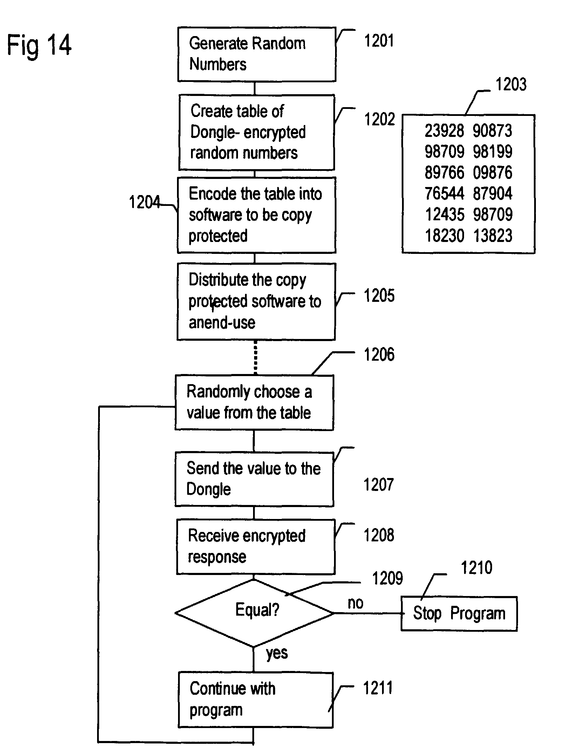

One can copy protect software with a Dongle using the technique illustrated in Figure 14.

1201: The software vendor generates a list of random numbers.

1202: The software vendor attaches a Dongle to his or her machine and asks the Dongle to encrypt each random number using the DongleKey. The software vendor creates a table, e.g, 1203, of the encryption results. For example, when the Dongle encrypts the value 23928, the result is 90873. When the Dongle encrypts the value 98709 the result is 98199.

1204: The software vendor encodes the table into the software to be protected. The software includes code that communicates with the Dongle. This code instructs the protected software how to execute steps 1206 through 1211.

1205: The software vendor sends the protected software to an end-user.

1206: The end-user receives the protected software. Upon each execution, the software randomly chooses a value from the table, e.g., the third value is 89766.

1207: The protected software sends the random value to the Dongle and requests encryption using the DongleKey.

1208: The Dongle returns the encrypted value, e.g., 09876.

1209: The protected software compares the result received from the Dongle with the expected value in the table. If the comparison fails, then the end-user does not prove that he or she has the required Dongle, and the program stops 1210. Otherwise, the program continues with its normal execution 1211 and periodically repeats starting with step 1206. It is exceedingly difficult to perform the encryption step without the aid of the Dongle, because one cannot perform the encryption without first obtaining the DongleKey.

Readerless Device

A readerless device is a particular kind of duplication-protected media that has no electronic connection with a computer. For example, the SecureID™ device is a mobile device with an LED display. Periodically (each minute or two) the mobile device performs a cryptographic operation and displays a new challenge key. It is exceedingly difficult to predict the next challenge key before the next display. As a result, it is exceedingly difficult to duplicate the device.

A similar function is implemented on a central server which generates the same sequence of challenge keys while precisely synchronizing with the mobile device. The owner of the mobile device reads the LED display and sends the current challenge key to the central server. If the central server validates that the challenge key matches the one generated by the server during the current time period, then the central server authenticates the owner of the device.

Smart Card

From an end-user's perspective, a smart card has three states: in-use, idle, and destroyed. A smart card is in-use whenever the end-user inserts the smart card into his or her machine. An in-use smart card can execute cryptographic algorithms or other smart card services. An important property of a smart card is that it stores cryptographic keys securely -- rendering it impossible for an unauthorized party to construct an exact duplicate. Thus, a smart card is a duplication-protected media. An idle smart card performs no services. A common place to store an idle smart card is in an owner's pocket. A destroyed smart card is one that the owner misplaces or destroys, e.g., the owner accidentally drops the smart card between the cushions of a couch. After searching for the destroyed smart card the owner can either find the card or report the card as missing. The smart card issuing authority can either replace the destroyed smart card with an identical copy, or invalidate the lost smart card and issue a complete replacement.

One promising application of Smart Card technology is license and copy protection (LCP) as described in EP97710011.4. When the owner inserts his or her smart card, copy protected programs execute; and when the owner removes the smart card, the copy protected programs stop. So, the smart card acts as a "digital ignition key" that serves an analogous purpose to the ignition key in an automobile. A second promising application of Smart Card technology is Internet authentication. The owner authenticates him or herself to a remote machine by proving that he or she has the required smart card.

A problem with smart card technology is its inherent expense and logistic overhead. One cannot use a smart card until one physically attaches a computer to a smart card reader.

This problem is been solved by the features of claim 1 and claim 10.

The invention presents a bridge technology called Virtual Smart Card which emulates a real smart card by providing an identical interface and collection of services. However, a Virtual Smart Card has no physical manifestation. Any smart card-aware application can seamlessly inter-operate with either a real smart card or a Virtual Smart Card.

Although a Virtual Smart Card has no physical manifestation, a Virtual Smart Card emulates all three of the real smart card's states. An owner can insert a Virtual Smart Card with the effect that the Virtual Smart Card's state changes from idle to in-use. An owner can remove a Virtual Smart Card to change the state back from in-use to idle. After removing the Virtual Smart Card from one machine, the owner can potentially insert the Virtual Smart Card into a different machine. The owner cannot insert the Virtual Smart Card in the second machine until the owner removes the Virtual Smart Card from the first machine. If the owner's machine crashes, the owner may potentially lose his or her Virtual Smart Card. In this case, the owner usually can recover the lost Virtual Smart Card. However, in some rare cases, the Virtual Smart Card disappears and the owner must report the loss to the Virtual Smart Card issuing authority. The issuing authority responds in accordance to its policy, i.e., replacing the lost Virtual Smart Card with either an exact duplicate or a complete replacement.

The issuing authority operates a central trusted server called a Virtual Smart Card Server (VSC Server). The VSC Server maintains a database of all Virtual Smart Cards including the respective states and cryptographic keys. A Virtual Smart Card owner performs an insert operation by sending a request to the VSC Server for his or her Virtual Smart Card. The VSC Server mediates the request by first authenticating the owner and the Virtual Smart Card's implementation; and then validating that the requested Virtual Smart Card is currently in the idle state. If the authentication and mediation succeeds, then the VSC Server updates the database to indicate that the Virtual Smart Card is in-use. The VSC Server then permits the owner to use the Virtual Smart Card. When the Virtual Smart Card owner performs a remove operation, the Virtual Smart Card disables itself, securely sends a remove request to the VSC Server, and then shuts itself down. When the VSC Server receives a remove request, the VSC Server resets the Virtual Smart Card's state in the database to idle.

An alternative to the communication between the Virtual Smart Card and the Virtual Smart Card Server is presented in claim 10. The Virtual Smart Card Reader communicates with a Dongle (or some other duplication-protected physical media). A duplication protected physical media has the property that it is exceedingly difficult for an unauthorized attacker to construct a copy of the media. The Virtual Smart Card is a copy protected program that executes only if permitted by the Dongle. If the end-user attaches the Dongle to the machine, then the Virtual Smart Card executes; otherwise, the Virtual Smart Card stops.

A special extension to the claimed Virtual Smart Card is to augment the user authentication mechanism with a reader-less authentication device.

The advantage of this extension is excellent authentication at a low cost. The benefit is that the Virtual Smart Card architecture effectively extends the functionality of the reader-less device to include encryption.

As claimed one promising application of Virtual Smart Card technology is license and copy protection (LCP) . When the owner inserts his or her Virtual Smart Card, copy protected programs execute; and when the owner removes the Virtual Smart Card, the copy protected programs stop. So, the Virtual Smart Card acts as a "digital ignition key" that serves an analogous purpose to the ignition key in an automobile. A second promising application of Virtual Smart Card technology is Internet authentication. A common architecture exploited by many of today's enterprises is a corporate Intranet connected to the Internet via a firewall. In this architecture, an Intranet-located VSC Server distributes Virtual Smart Cards to machines physically located behind the corporate firewall. Once an owner inserts his or her Virtual Smart Card, the owner can exploit the Virtual Smart Card's cryptographic services to securely connect to Internet servers, Extranets, or generate digital signatures.

For a more complete understanding of the present invention and for further advantages thereof, reference is now made to the following Description of the Preferred Embodiments taken in conjunction with the accompanying Drawings in which:

FIG. 1    is a block diagram of the present system architecture of the virtual smart card system;

FIG. 2 is a schematic representation of a master key executing protocol;

FIG. 3 is a schematic representation of an enterprise that operates a VSC Server behind its firewall;

FIG. 4 is a schematic representation of the states which a Virtual Smart Card can get;

FIG. 5 is a schematic representation of the present system architecture of the virtual smart card system with a great deal of Virtual Smart Cards;

FIG. 6 is a block diagram of the insert operation of a Virtual Smart Card;

FIG. 7 is a schematic representation of a channel establishment between a Virtual Smart Card Server and a Virtual Smart Card;

FIG. 8 is a block diagram of the authentication process of a Virtual Smart Card;

FIG. 9 is a detail of block diagram FIG. 8 showing the authentication1 process for user authentication;

FIG. 10 is a schematic representation of a detail of block diagram FIG. 8 showing the implementation authentication;

FIG. 11 is a block diagram of the remove operation;

FIG. 12 is a block diagram of the recover operation;

FIG. 13 is a block diagram of the entire communication process between the Virtual Smart Card Server and the Virtual Smart Card;

FIG. 14 is a block diagram of the method using Duplication Protected Media;

FIG. 15 is a block diagram of the present system architecture of the virtual smart card system using no network connection.

Implementation/Architecture

Human Interface

When a Virtual Smart Card owner executes the insert operation, a program prompts the owner for a password. When the owner executes the remove operation, the Virtual Smart Card program stops executing.Once the owner removes the Virtual Smart Card, the owner may travel to a different machine and insert the Virtual Smart Card there.

If the owner loses the Virtual Smart Card, the owner executes a recover program. The recover program prompts the owner for a password. The recover program then provides a success or error code to the owner depending upon the state of the recovery.

Both the insert and recover programs derive two symmetric keys from the owner's password. The programs compute a hash algorithm, e.g. MD5, Menezes, A., Oorschot, P., and Vanstone, S., Handbook of Applied Cryptography, CRC Press, Boca Raton 1996, over the password and a well-known, hardcoded SALT-value. The first half of the hash result is an authentication key and the second half of the hash result is a protection key.

The purpose of the authentication key is to securely identify the owner to a VSC Server. The purpose of the protection key is to encrypt protected information that the Virtual Smart Card uploads to the VSC Server; and decrypt protected information that the Virtual Smart Card downloads from the VSC Server. The protection key ensures that no operator of the VSC Server can discover or modify a Virtual Smart Card's protected information.

System Architecture

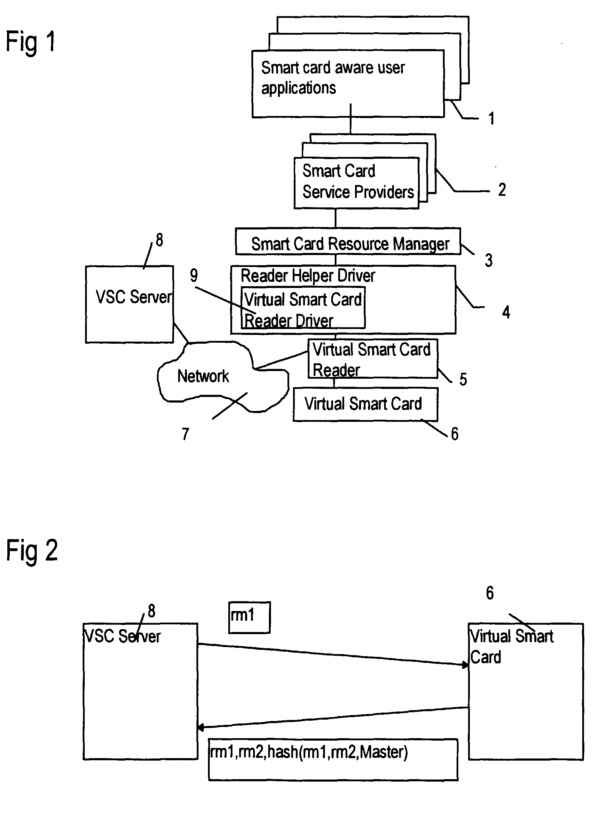

Figure 1 illustrates the Virtual Smart Card architecture. Smart card aware user application 1 communicates with the "smart card" via the DLLs of a smart card service provider 2. The smart card service provider 2 relies upon the services of the Smart Card Resource Manager 3 which communicate with a Smart Card Reader Helper Driver 4 and a Virtual Smart Card Reader Driver 9.

As opposed to a physical smart card reader, a Virtual Smart Card Reader 5 is virtual hardware acting as a emulator that passes information to and from a Virtual Smart Card 6. Additionally, the Virtual Smart Card Reader 5 communicates with a Virtual Smart Card Server 8 (VSC Server) via a network 7, e.g., an Intranet, Extranet, or the Internet.

Protected Information

A Virtual Smart Card 6 stores protected information that it guards in terms of confidentiality and integrity. The most important example of protected information is a private key used for digital signatures, decryption, key management, and possibly other purposes. Other examples of protected information include counters used in software rental applications, and confidential information used by healthcare providers.

The VSC Server 8 stores all protected information in its database (encrypted using the respective protection keys). When a Virtual Smart Card owner inserts a Virtual Smart Card 6, the VSC Server 8 downloads the protected information; and when the owner removes a Virtual Smart Card 6, the Virtual Smart Card 6 uploads the updated protected information to the VSC Server 8.

Encrypted Memory

Immediately after performing the insert operation, the Virtual Smart Card 6 generates a new, temporary symmetric key. Next, the Virtual Smart Card 6 decrypts the protected information using the protection key and re-encrypts the information using the temporary key. When performing the remove operation, if an update is required, the Virtual Smart Card decrypts the protected information using the temporary key and then re-encrypts the information using the protection key. The Virtual Smart Card 6 uploads the re-encrypted information to the VSC Server 8.

During the relatively short periods in which the Virtual Smart Card 6 needs the protected information, the Virtual Smart Card 6 decrypts the information using the temporary key. Next, the Virtual Smart Card 6 performs processing as required. If the processing modifies the protected information, then the Virtual Smart Card re-encrypts the information using the temporary key. Finally, the Virtual Smart Card 6 zeros out the plain text image. The Virtual Smart Card 6 repeats this procedure each time that it uses the protected information.

Volatile Memory

The Virtual Smart Card 6 stores its encrypted protected information in volatile memory (not shown) of the data processing unit or machine, e.g. a personal computer, where it runs. Before the Virtual Smart Card 6 exits, it explicitly zeros out all of its volatile memory used to store the protected information.

Wired Memory

A Virtual Smart Card 6 wires the memory that stores protected information. The wire operation precludes the memory from being paged out to swap space, e.g. at a hard disk of a personal computer.

Polling

A Virtual Smart Card 6 periodically polls its machine to ensure that an attacker has not copied the Virtual Smart Card 6 to a different machine. The Virtual Smart Card 6 stores a Machine Unique Key (MUK) in volatile memory. Periodically, the Virtual Smart Card 6 obtains a new MUK from the machine. If the new MUK does not match the old MUK, then the Virtual Smart Card 6 detects an attempted attack and exits. The MUK is a hash of information that uniquely identifies the machine, e.g., network address, machine name, number of sectors on each fixed disk, and size of swap space.

The Virtual Smart Card 6 performs a similar procedure using its Process ID. If the Virtual Smart Card 6 notices during polling that the queried Process ID does not match the stored Process ID, then the Virtual Smart Card 6 immediately exits.

The Virtual Smart Card periodically polls its host machine for the time of day. The Virtual Smart Card 6 compares its expectation with the result of the polling. If the result does not reasonably match expectations, then the Virtual Smart Card 6 shuts itself down by executing the remove operation. For example, if the Virtual Smart Card 6 polls the machine approximately every hour, then the Virtual Smart Card 6 would detect an error if the elapsed time between polling exceeds ninety minutes.

Virtual Smart Card (VSC) Server

The VSC Server 8 is a trusted application which maintains a database. It has to supervise one or more Virtual Smart Cards 6. In order to make the supervision possible each Virtual Smart Card 6 has the following records:

- Serial Number: The serial number is a unique identifier of a Virtual Smart Card 6.

- State: The state variable stores exactly one of the following values: in-use, idle, and destroyed. If state has the value in-use, then the VSC Server 8 recognizes that a Virtual Smart Card 6 has been inserted but not yet removed. The idle state indicates that the Virtual Smart Card 6 has been removed. The destroyed state indicates that the Virtual Smart Card 6 is no longer valid. The state of a destroyed Virtual Smart Card 6 never changes.

- MUK: The MUK is a machine unique key. If the state is either idle or destroyed, then the MUK gets the NULL value. If the state is in-use, then MUK value gets the MUK of the currently executing machine.

- Protected Information: The protected information contains information that the Virtual Smart Card 6 protects against attack. Examples of protected information are confidential encryption keys, or the state of electronic counters. The owner's protection key encrypts the protected information. Normally, the VSC Server 8 operators do not have access to an owner's protection key.

- Protected Channel Info: If the state of a the Virtual Smart Card 6 is idle or destroyed, then the protected channel info gets the NULL value. If the state is in-use, then the Protected Channel Info gets the encryption key and other state information of a protected channel through which the Virtual Smart Card 6 and the VSC Server 8 communicate.

- Authorization Info: The authorization information stores all information required to authorize a Virtual Smart Card 6, e.g., the hash of the authorization key. An example hash algorithm is the so called MD5.

List of Operations

Insert

The insert operation enables a Virtual Smart Card 6 on exactly one computer. The VSC Server 8 sets the state of the Virtual Smart Card 6 to in-use and refuses all subsequent insert requests for the same Virtual Smart Card 6 until the VSC Server 8 receives a corresponding remove request. The following five steps: Channel Establishment, Authentication, Machine Unique Code, Machine Lock, and Download present the details:

Channel Establishment

Channel establishment builds a protected communication link between the Virtual Smart Card 6 and the VSC Server 8. The channel establishment protocol is a transport layer security protocol, e.g., Secure Socket Layer SSL [SSL version 3.0]. In this protocol, the VSC Server 8 has a well-known public key and a corresponding confidential private key. The Virtual Smart Card 6 generates a new symmetric key called a session key and encrypts the session key using the VSC Server's public key. The VSC Server 8 discovers the session key by applying its private key. The protected channel consists of information communicated between the two parties that is encrypted using the session key. Note that a good implementation of a protected communication channel, e.g., SSL, provides protection against cryptoanalysis, e.g., playback.
The VSC Server 8 and the Virtual Smart Card 6 use this protected channel for all subsequent communication. In other words, the VSC Server 8 and the Virtual Smart Card 6 encrypt all future communications using the session key. The subsequent communication includes the insert operation and the remove operation. The session key disappears when the Virtual Smart Card program exits.

Authentication

The Virtual Smart Card 6 authenticates its owner and its own implementation to the VSC Server 8. The purpose of the owner authentication is to ensure that an attacker cannot steal someone else's Virtual Smart Card 6. The purpose of implementation authentication is to ensure that an attacker cannot build a leaky Virtual Smart Card 6 emulator. Such a leaky emulator would be used by an attacker to authenticate as a real Virtual Smart Card 6 and subsequently leak the protected information.

User Authentication

Using a hash function, e.g., MD5, denoted by h, the Virtual Smart Card 6 computes *h(authentication key)*. The Virtual Smart Card 6 uploads the hash result to the VSC Server 8. The VSC Server 8 authenticates the Virtual Smart Card 6 only if the VSC Server 8 can validate the hash.
Since the protected channel encrypts all information communicated between the Virtual Smart Card 6 and the VSC Server 8, there is no possibility that an attacker can steal the authentication key or its hash. The protected channel additionally guards against cryptoanalysis attacks, e.g., playback.

Virtual Smart Card Authentication

The Virtual Smart Card 6 authenticates its own implementation using any or all of a variety of different techniques such as Embedded Shared Key; Keyfile Authentication and/or One-Time Algorithm as described below.

Embedded Shared Key

A shared key called Master is embedded into all Virtual Smart Cards 6. Each Virtual Smart Card 6 proves that it has the Master key by executing the protocol illustrated in Figure 2. First, the VSC Server 8 generates a unique random number rm1, and sends this random number rm1 to the Virtual Smart Card 6. Next, the Virtual Smart Card 6 generates a second random number rm2 and computes the hash, e.g., MD5, of rm1, rm2, and Master. The Virtual Smart Card 6 returns the random numbers rm1, rm2, and the result of the hash to the VSC Server 8. The VSC Server 8 then re-computes the hash and compares for equality. The VSC Server 8 passes this authentication step if and only if the comparison succeeds and the Virtual Smart Card 6 returns the correct hash result within a short time period, e.g., 30 seconds.
The embedded shared key authentication step securely authenticates a Virtual Smart Card 6 only if the Virtual Smart Card's Master key remains confidential. However, if a hacker were to disassemble a Virtual Smart Card 6 and discover the Master, then the hacker could break the security of all Virtual Smart Cards. As a result, the VSC Server 8 performs the second authentication step described below.

Keyfile Authentication

The Virtual Smart Card 6 obtains an license and copying protection (LCP)-compliant keyfile which contains the Virtual Smart Card's public key and a confidential authentication string as1, e.g., a 128-bit random number. The keyfile is signed using the VSC Server's private key and is encrypted using a proprietary symmetric algorithm. Systems using a keyfile are known from the Patent application EP97710011.4.

A software vendor locates the customer's public keying material and embeds the customer's public keying material into a keyfile and sends the keyfile to the customer by electronic mail. Once the customer installs the keyfile, the protection mechanism permits the customer to execute the protected software (provided that the customer can prove that he or she has access to the customer's private keying material via a probabilistic proof). The creation of the keyfile is performed by a keyfile generator, which is a program that executes at the vendor's facility. The vendor must take care to guard this program.

The Virtual Smart Card 6 decrypts the keyfile and validates the signature. Next, the Virtual Smart Card 6 decrypts and discovers the plaintext key as1. Next, the VSC Server 8 and the Virtual Smart Card 6 repeat the protocol described above in conjunction with Figure 2 with one exception. The VSC Server 8 and the Virtual Smart Card 6 substitute the confidential authentication string as1 for the master key.

The advantage of keyfile authentication is that the attacker does not compromise all Virtual Smart Cards by breaking the security of a single keyfile.

Any implementation of a Virtual Smart Card 6 should authenticate itself using both forms of authentication described above if a high grade of security assurance is wanted. However, in order to provide the best security assurance, one should additionally implement the advanced form of authentication listed below.

One-Time Algorithm

The VSC Server 8 authenticates a Virtual Smart Card 6 with the aid of mobile agents and automated code generation. A mobile agent is an executable code segment that passes between different machines, e.g., an Active X control. Automated code generation is vehicle by which one can generate a new executable at run-time. The automated code generator produces Virtual Smart Cards 6 according to a template which ensures that all Virtual Smart Cards 6 are identical in all but two respects:

Authentication: Each Virtual Smart Card 6 has a unique authentication function, *f*. This function accepts a randomly generated number as input and produces a number as output. This output is suitable for deriving a key used in a symmetric encryption algorithm, e.g., DES.

Wrapper: The portion of the Virtual Smart Card 6 executable that implements *f* is encrypted (with a hardcoded symmetric key). Immediately before executing *f*, the Virtual Smart Card 6 executable locates the hardcoded key and performs the required decryption. The Virtual Smart Card 6 zeros out the plaintext implementation of *f* immediately after execution.

At runtime, the VSC Server 8 generates two random numbers, *x* and *y*. The VSC Server 8 computes the following result:

$$w = E[x, f(y)],$$

where *E* is a symmetric encryption function, e.g., DES, *x* is a plaintext value, and *f(y)* is a value used to derive an encryption key. In other words, the VSC Server 8 computes *w* by encrypting *x* using the result of the computation *f(y)*. The VSC Server 8 passes *w* and *y* to the Virtual Smart Card 6 . Authentication succeeds only if the Virtual Smart Card 6 can discover *x* using the following decryption step within a short time period, e.g., 30 seconds:

$$x = D[w, f(y)].$$

That is, the Virtual Smart Card 6 decrypts w using a key derived from the result of the computation *f(y)*.

No two Virtual Smart Cards share the same function, *f*. Furthermore, no two installs of the same Virtual Smart Card 6 share the same function *f*. Each implementation of *f* should vary in terms of both operations and parameters. Furthermore, each implementation of *f* should be rather imposing from the perspective of a reverse engineering attack. An example specification of *f* is provided below:

$$f(y) = \frac{28734y}{\int_{23}^{87} \cos(y)^{19} dy}$$

An imposing function, *f*, would frustrate an attacker. The VSC Server 8 can quickly generate the required implementation given the aid of a good mathematics tool which automatically generates "*C*" implementations. For example, we specified the example function, *f*, using "Mathcad", Hompage ref:http://www.mathsoft.com/mathcad/ - a commercially available tool. Using this tool were able to generate ten examples of imposing functions in just a few minutes.

## Machine Unique Code

After successful authentication, the Virtual Smart Card 6 generates a Machine Unique Key (MUK) and uploads the MUK to the VSC Server 8. The VSC Server 8 uses the MUK in the recover operation described in a following section.

## Machine Lock

The Virtual Smart Card 6 exclusively locks a well-known resource on the local machine. This lock ensures that only a single copy of the Virtual Smart Card 6 executes on the machine and its operational system at any point in time. An example of a lock on Windows 95™ or Windows NT™ is an absolute path of a registry entry opened for exclusive access. The first Virtual Smart Card 6 to open the registry gets the lock and any subsequent Virtual Smart Card 6 process must wait until the first process releases the lock. In the event of a machine or process crash, the operating system automatically releases the lock.

## Download

If the state of the Virtual Smart Card 6 as recorded in the VSC Server's 8 database is idle, then the VSC Server 8 resets the state to in-use; otherwise, the VSC Server 8 returns failure. Upon success, the VSC Server 8 downloads all of the Virtual Smart Card's protected information through the protected channel. This information potentially includes confidential encryption keys, secured counters.

At this point the Virtual Smart Card 6 has been inserted and is ready for use.

## Remove

At any time after successfully performing an insert operation, a Virtual Smart Card 6 may perform the remove operation (using the protected channel established during the insert operation). First, the Virtual Smart Card 6 disables itself by refusing all requests for services. Next, the Virtual Smart Card 6 sends a remove request to the VSC Server 8 which uploads the protected information (encrypted using the protection key). Upon receipt of a remove request, the VSC Server 8 resets its corresponding database entry to idle and returns a success acknowledgment. Next, the Virtual Smart Card 6 unlocks the local machine lock, zeros out the protected information, and shuts itself down.

## Recover

The insert/remove protocol does not prohibit an owner from losing his or her Virtual Smart Card 6. If the insert operation succeeds but the corresponding remove operation fails, then the VSC Server 8 continues to mark the Virtual Smart Card 6 as in-use despite the fact that the outstanding Virtual Smart Card 6 no longer executes. The Virtual Smart Card 6 owner can request to return the state of the Virtual Smart Card 6 to idle by executing the recover operation. The constraint is that one must execute the recover operation upon the machine that lost the Virtual Smart Card 6.

The recover operation begins using the same initialization as the insert operation including channel establishment, authentication, MUK, and machine lock. The VSC Server 8 checks that the provided MUK equals the MUK as stored by the last insert operation. If the check succeeds, then the VSC Server 8 resets the state in the data base of the Virtual Smart Card 6 to idle.

The recover operation is secure because it ensures that no machine currently has an outstanding instance of the Virtual Smart Card 6. The MUK check ensures that the VSC Server 8 and the requesting machine agree upon the machine that last executed the successful insert operation. The machine lock ensures that this machine is not executing any other copy of the Virtual Smart Card 6. As a result, the recover operation executes successfully only if no outstanding instance of the in-use Virtual Smart Card 6 exists.

In rare cases, the Virtual Smart Card 6 protocol can lead to a catastrophic failure - a lost, unrecoverable Virtual Smart Card 6. This state occurs when a Virtual Smart Card 6 cannot execute a recover operation. For example, consider a Virtual Smart Card 6 that executes upon a machine that exhibits a severe, catastrophic failure such as an unrecoverable disk error. In this case, it is possible that the MUK check could potentially fail when it should succeed.

In the case of a catastrophic failure, the VSC Server 8 must deal with the same situation as a real smart card owner who physically loses his or her real smart card. Depending upon the VSC Server's 8 policy, the VSC Server 8 can choose how to issue the new Virtual Smart Card 6.Applications of the Virtual Smart Card

One may deploy Virtual Smart Card 6 technology in almost any system that uses real smart cards. This section presents some examples.

## Software Copy Protection

The Software License and Copy protection system LCP prohibits software from executing unless an end-user can produce a licensed private key. A keyfile issued by the software vendor (or another authorized party) encodes the license. Security countermeasures ensure that an attacker cannot forge a keyfile which contains a public key. At runtime, a copy protected program asks for a proof that the end-user has a licensed private key. The copy protected program validates the proof using the public key stored in the keyfile.

Some example applications of Software License and Copy protection system LCP using Virtual Smart Cards 6 are listed below.

- Try-Before-Buy: Before purchasing an application, a potential customer obtains a Try-Before-Buy demo. The keyfile for the demo permits limited usage in terms of either functionality or permitted executable period. Hopefully, if the potential customer likes the demo, then the customer subsequently purchases the software. The software vendor connects a VSC Server 8 to the Internet or another network that allows access to many computers. Anyone can connect to the Internet whenever he or she wishes, register with the software vendor, and obtain a unique Virtual Smart Card 6. The vendor downloads a corresponding keyfile to permit the end-user to execute the program.

- Network PCs and Network Computers: In order to decrease the total cost of ownership of computers, enterprises are beginning to administer machines using a client/server architecture. Each client regularly obtains programs and maintenance services from the central server. The server bears the responsibility of ensuring that each client runs correctly. One can add VSC Server 8 functionality to the central server without any significant increase in overhead because the architecture requires a network connection anyway.

- Licensed Software Repository: An enterprise's central server stores a collection of copy protected programs. Employees download the programs from the central server onto their machines. If the employee wishes to execute a program, then the employee purchases a keyfile. The enterprise distributes private keys to employees guarded by Virtual Smart Cards 6.

Network Authentication

Intranet VSC Server

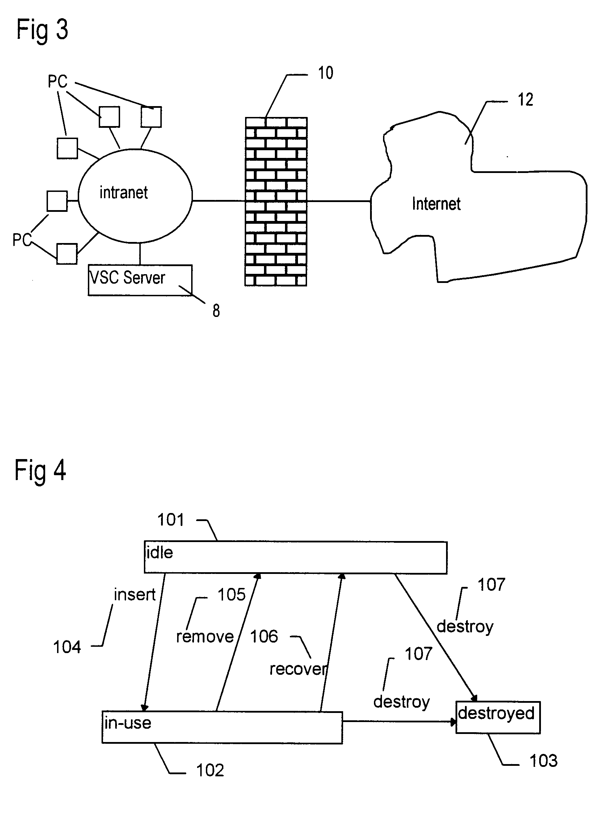

The potential applications of Virtual Smart Cards 6 are not limited to software copy protection. Figure 3 illustrates an enterprise that operates a VSC Server 8 in an intranet 11 behind a firewall 10 which protects the intranet 11 from the internet 12. The purpose of the architecture is to deploy asymmetric cryptography throughout the enterprise without bearing the cost of smart cards. Some employees have a Personal Computer PC. Each employee can use the services of his or her Virtual Smart Card 6 to authenticated to remote nodes, communicate via secured electronic mail, electronically sign documents, or use copy protected programs.

The security of the architecture significantly exceeds the security employed by most enterprises today because of the reduced dependence upon passwords. For most purposes, in lieu of authenticating using a password, an enterprise employee can authenticate using his or her Virtual Smart Card's 6 private key.

The weakest point in the architecture is the employee's authentication to the VSC Server 8. Ultimately, the employee must supply his or her password. Nevertheless, one can optionally configure a VSC Server 8 to require additional authentication material, e.g., a properly registered MUK, or coordination with an external authentication method such as the Secure ID system.

Internet Service Provider VSC Server 8

An Internet Service Provider (ISP) is an ideal candidate for operating a VSC Server 8. When one of the ISP's customers connects to the ISP, the customer automatically inserts a Virtual Smart Card 6; and at disconnect time, the Virtual Smart Card 6 automatically removes itself. The customer may subsequently execute copy protected programs, securely access network services, and participate in electronic commerce.

The ISP can provide the VSC Server 8 using minimal extensions to its existing customer database. With the exception of a little extra processing at customer login time, the Virtual Smart Card 6 service requires no ISP resources.

Telephony over an Internet Protocol network(H.323)

The upcoming trend in enterprise telephony is to replace traditional telephone technology e.g., PBXs with a telephone to LAN gateway. Enterprise employees connect their telephones, picture phones, and computers PC to their intranet 11; and a gateway connects the intranet to external networks such as the telephone network, the Internet 12, and Asynchronous Transfer Modus (ATM) networks.

A gateway and gatekeeper standard that provides telephony over an Internet Protocol (IP) network is the *H.323*. *H.323* defines a gateway that translates IP traffic to and from the telephone network; and *H.323* defines a gatekeeper that mediates and helps route traffic through the gateway. Unfortunately, by connecting the intranet to both the telephone network and the Internet, the enterprise unwittingly creates one of the most valuable resources potentially available to a hacker. Consider, for example, a hacker who breaks through the enterprise's Internet firewall 10 and accesses the intranet 11. This hacker may potentially place telephone calls from this intranet 11 thereby building a telephone gateway to the world.

Virtual Smart Card 6 technology can provide an important countermeasure to such an attack. By implementing support for asymmetric authentication in the *H.323* gateway and gatekeeper, the system can effectively preclude Internet hackers from placing phone calls. The idea is that the hacker cannot obtain a Virtual Smart Card 6 with the required private keys and as a result cannot authenticate to the gateway and gatekeeper.

Description of Embodiment of Invention

States

Figure 4 illustrates the states of the Virtual Smart Card (VSC) system. When a Virtual Smart Card 6 is created, its state is idle 101. When a Virtual Smart Card owner executes an insert operation 104, the state changes to in-use 102. Also, if the current state is idle 101, the destroy operation 107 changes the state to destroyed 103. When currently in the in-use 102 state, the remove 105 operation and the recover 106 operation change the state to idle 101. Also, when currently in the in-use 102 state, the destroyed 107 operation changes the state to destroyed 103.

Architecture

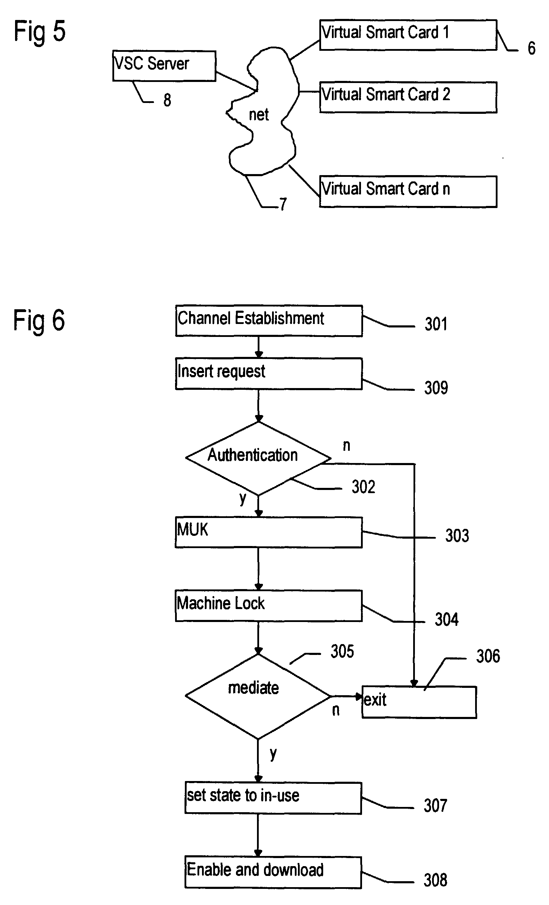

Figure 5 illustrates the architecture of the Virtual Smart Card system. One or more Virtual Smart Cards 6 attach to a computer network 7. No assumptions are made concerning the security of the computer network 7. A Virtual Smart Card server 8 also connects to the computer network 7.
The Virtual Smart Card operations are described below.

Insert (104 Figure 4):

The insert operation 104 illustrated in Figure 6 changes the state from idle 101 to in-use 102. First, the insert operation 104 executes a channel establishment step 301. The channel establishment step 301 establishes a protected channel between the VSC Server 8 and the Virtual Smart Card 6. All subsequent communication between the VSC Server 8 and the Virtual Smart Card 6 is through this protected channel. The authentication step 302 authenticates both the Virtual Smart Card 6 owner and the Virtual Smart Card 6 implementation to the VSC Server 8. If the authentication step fails, then the Virtual Smart Card 6 exits 306 (and does not change the state). If the authentication step succeeds, then the Virtual Smart Card 6 computes a Machine Unique Key (MUK) 303 and uploads the MUK to the VSC Server 8. Next, the Virtual Smart Card 6 grabs an exclusive machine lock 304. Next, the Virtual Smart Card 6 requests mediation 305. If the mediation 305 fails, then the Virtual Smart Card 6 exits 306 (and does not change the state). Otherwise, the VSC Server 8 sets the state of the Virtual Smart Card 6 to in-use 102. Upon receipt of a positive acknowledgment from the VSC Server, the Virtual Smart Card 6 enables itself for future use.

Channel Establishment (301 Figure 6):

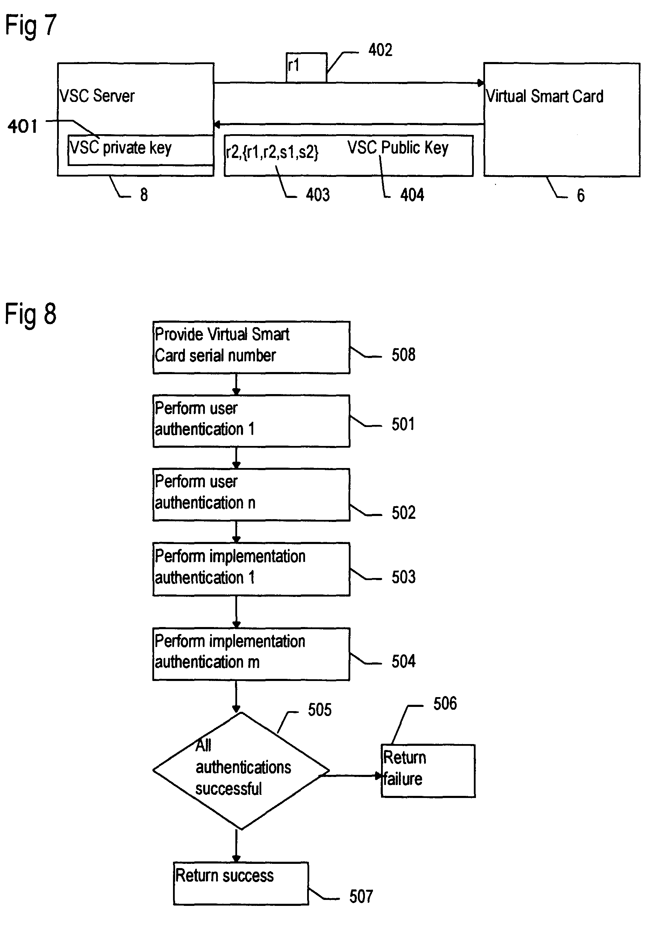

As shown in Figure 7 the VSC Server 8 has an asymmetric private key 401 that the VSC Server 8 keeps confidential. The VSC Server 8 publishes the corresponding public key 404 to everyone. The VSC Server 8 generates a random number, r1 402, and sends r1 402 to the Virtual Smart Card 6. The Virtual Smart Card 6 generates a second random number r2. The Virtual Smart Card 6 generates two additional random numbers used as session keys, s1 and s2. The Virtual Smart Card 6 encrypts r1, r2, s1, and s2 using the public key 404. The Virtual Smart Card 6 sends r2 and the encrypted result to the VSC Server 8. Neither the VSC Server 8 or the Virtual Smart Card 6 disclose s1 or s2 to other parties. Until the Virtual Smart Card 6 exits, all subsequent communications are encrypted using a symmetric encryption algorithm, e.g., DES, using the session key s1. Furthermore, all communications are hashed (e.g., MD5) together with session key s2. The recipient validates by re-computing the hash. The purpose of the hash is to ensure that no attacker modified the communication in-transit.
Note that in lieu of the protocol described above, one can potentially substitute a SSL or some other appropriate transport layer security protocol.

Insert request (309 Figure 6):

The Virtual Smart Card 6 sends a message to the VSC Server 8 requesting an insert operation.

Authentication (302 Figure 6)

As shown in Figure 8 the Virtual Smart Card 6 sends its unique serial number 508 to the VSC Server 8. The VSC Server rejects any other operations (insert, remove, recover, destroy) with this same serial number until this entire Insert operation 104 exits. Upon exit, this Insert operation either does not change the state or changes the state to in-use.
Authentication 302 requires the Virtual Smart Card 6 owner to authenticate him or herself using at least one method 501.
However, the system may additionally implement two or more independent methods (represented by 502). The Virtual Smart Card 6 authenticates its own implementation (distinct from the owner's authentication) 503. The Virtual Smart Card 6 may optionally authenticate its implementation using additional independent methods 504.
The VSC Server 8 mediates to ensure that all authentications are successful 505. If any authentication fails, then the VSC returns a failure and does not change the state. Otherwise, the VSC Server 8 returns a success code and continues processing the insert operation 104.

User Authentication (501 Figure 8)

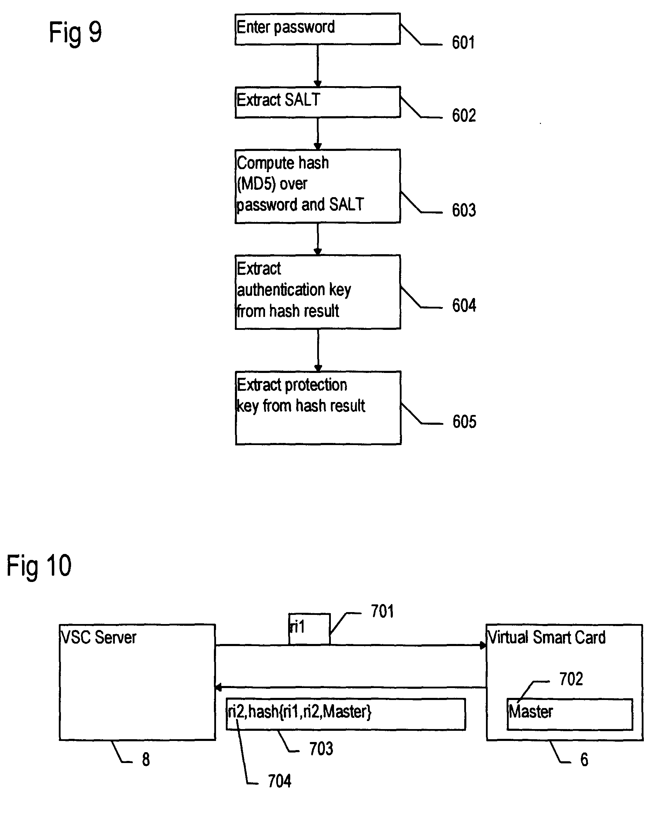

Multiple mechanisms exist for authorizing a user (smart card owner). One such mechanism is illustrated in Figure 9. The smart card owner enters a password 601 (a confidential string). The Virtual Smart Card 6 program extracts a confidential value called SALT 602 from its own executable. All Virtual Smart Card 6 programs have the same SALT 602. The Virtual Smart Card 6 program computes 603 the MD5 hash algorithm over the password 601 and the SALT 602. The result is a 128 bit value. The Virtual Smart Card 6 program extracts the first 64 bits and names these bits the authentication key 604. The Virtual Smart Card 6 program extracts the second 64 bits and names these bits the protection key 605.

The Virtual Smart Card authenticates the smart card owner by proving to the VSC Server that the Virtual Smart Card knows the authentication key. The simplest such "proof" is to simply send the authentication key to the VSC Server. Since the communication channel is protected 301, one need not be concerned with an intruder who listens for passwords. The VSC Server simply validates the authentication key against its internal table. More complex password authentication schemes also exist [Menezes, A., Oorschot, P., and Vanstone, S., Handbook of Applied Cryptography, CRC Press, Boca Raton 1996]

Implementation Authentication (503 Figure 8)

Multiple mechanisms exist for authenticating the Virtual Smart Card's implementation. One such mechanism is illustrated in Figure 10. The VSC Server 8 generates a new, unique random number ri1 701. The VSC Server 8 sends ri1 701 to the Virtual Smart Card 6. The Virtual Smart Card 6 has a confidential Master key 702 embedded within the Virtual Smart Card 6 executable image. All Virtual Smart Cards 6 have the same Master Key 702 embedded within their own executable. The Virtual Smart Card 6 generates a new, unique random number ri2 704. The Virtual Smart Card 6 computes the hash, e.g., MD5, of ri1 701, ri2 704, and Master 702. The Virtual Smart Card 6 returns ri2 704 and the result of the hash to the VSC Server. The VSC Server 8 recomputes the hash using ri1 701 and ri2 704. If the recomputed hash matches the value returned by the Virtual Smart Card 6 then the authentication step succeeds. This authentication step proves to the VSC Server that the Virtual Smart Cards knows the Master Key. An attacker cannot build a rogue implementation of a Virtual Smart Card without first disassembling a Virtual Smart Card and discovering the Master Key.

Machine Unique Key MUK (303 Figure 6):

The Virtual Smart Card 6 computes a machine unique key (MUK) 303 of its local machine. First the Virtual Smart Card 6 extracts the following values from its machine: the network address, the machine's name, the currently logged in user (if applicable), and the number of sectors on each fixed drive. The MUK 303 is the hash of all of the extracted information.

Machine Lock (304 Figure 6):

The Virtual Smart Card 6 opens a well-known path for exclusive access in the local machine's registry. The registry is a resource available in Windows 95™ or Windows NT™ with separately identified items. The same well-known path is hardcoded into every implementation of a Virtual Smart Card 6 program. Only one Virtual Smart Card 6 program at a time can open the path for exclusive access.

One may implement a Virtual Smart Card 6 to execute on a machine other than Windows 95™ or Windows NT™. In this case, in lieu of the registry, the Virtual Smart Card 6 obtains exclusive access to some other well-known resource, e.g., a file. The idea is that the well-known resource helps cooperating Virtual Smart Cards 6 ensure that only one Virtual Smart Card 6 executes on a machine at a time.

Mediation (305 Figure 6):

The VSC Server 8 looks up the Virtual Smart Card 6 in the VSC Server's 8 database using the Serial Number provided during Authentication 302. If the state of the Virtual Smart Card 6 is not idle then the VSC Server 8 refuses the request and returns a negative acknowledgment. The Virtual Smart Card 6 then exits.

If the state of the Virtual Smart Card 6 is idle, then mediation succeeds and the VSC Server 8 proceeds to setting the state of the Virtual Smart Card 6 to in-use 307.

Set state to in-use (307 Figure 6):

The VSC Server 8 updates the record in the VSC Server's database for the Virtual Smart Card 6 by setting the state to in-use.

Enable and download (308 Figure 6):

The VSC Server 8 returns a positive acknowledgment and the Virtual Smart Card 6 begins servicing its owner. The VSC Server 8 also downloads information that is protected using the protection key 605. The Virtual Smart Card 6 uses the protection key 605 to decrypt. Subsequently, the Virtual Smart Card 6 can access the protected information.

Remove (105 Figure 4):

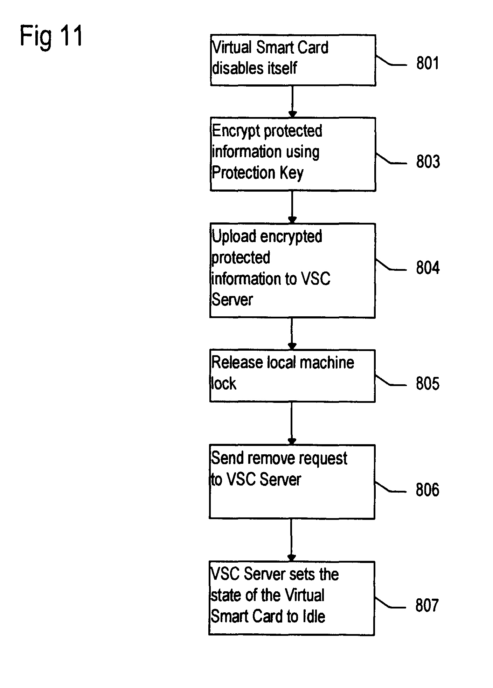

As shown in Figure 11 first the Virtual Smart Card 6 disables itself 801. Once disabled, the Virtual Smart Card 6 provides no services to its owner (other than completing the remove operation 105). First, the Virtual Smart Card 6 establishes a protected channel 301 with the VSC Server. The communication required for the remainder of the recover operation 106 passes through the protected channel. Second, the Virtual Smart Card 6 sends a remove request and the Virtual Smart Card's serial number to the VSC Server. The VSC Server rejects any other operations (insert, remove, recover, destroy) with this same serial number until this entire Remove operation 105 exits. The Virtual Smart Card 6 extracts its own protected information and encrypts 803 the information using its protection key 605. The Virtual Smart Card 6 uploads 804 the encrypted, protected information to the VSC Server 8. The Virtual Smart Card 6 releases 805 the machine lock 304. The Virtual Smart Card 6 sends a request for removal 806 through the protected channel 301. The VSC Server 8 sets the state of the Virtual Smart Card 6 to idle 101.

Recover (106 Figure 4)

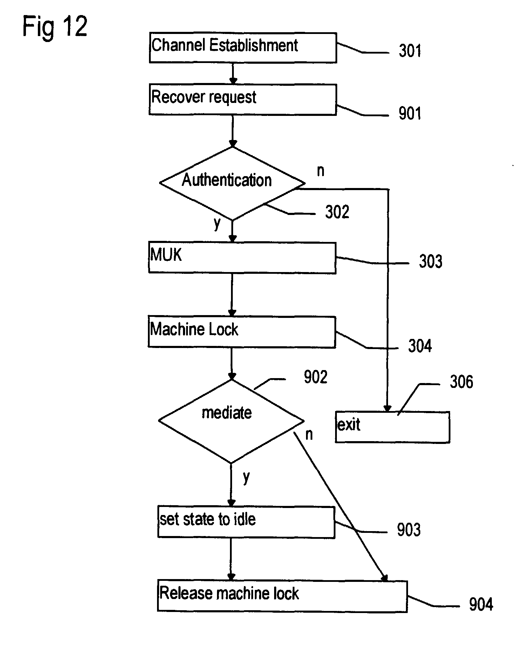

The recover operation is illustrated in Figure 12. The Virtual Smart Card 6 first establishes a protected channel 301. The communication required for the remainder of the recover operation 106 passes through the protected channel. The Virtual Smart Card 6 sends a recover message 901 to the VSC Server. The Virtual Smart Card 6 sends the Virtual Smart Card's serial number to the VSC Server. The VSC Server rejects any other operations (insert, remove, recover, destroy) with this same serial number until this entire Remove operation 105 exits. The recover operation 106 performs authentication 302. If the authentication fails, then the recover operation 106 exits 306 leaving the state unchanged. If the authentication 302 succeeds, then the Virtual Smart Card 6 uploads the MUK 303. Next, the Virtual Smart Card 6 grabs the Machine Lock 304. Next, the Virtual Smart Card 6 requests that the VSC Server 8 perform mediation 902. If the mediation 902 fails, then the Virtual Smart Card 6 releases the machine lock 904 and exits leaving the state unchanged. If the mediation 902 succeeds, then the VSC Server 8 sets 903 the state of the Virtual Smart Card 6 to idle 101. The Virtual Smart Card 6 then releases the machine lock 904 and exits. At this point, the state of the Virtual Smart Card 6 is suitable for executing an insert 104 operation.

Mediation 902

The VSC Server 8 looks up the Virtual Smart Card 6 in the VSC Server's 8 database using the Serial Number provided during Authentication 302. If the state of the Virtual Smart Card 6 is not in-use then the VSC Server 8 refuses the request and returns a negative acknowledgment leaving the state unchanged. The Virtual Smart Card 6 then exits.

Destroy (107 Figure 4)

The Virtual Smart Card 6 first establishes a protected channel 301. The communication required for the remainder of the Destroy operation 107 passes through the protected channel. The Virtual Smart Card 6 sends a destroy message to the VSC Server. The Virtual Smart Card 6 sends the Virtual Smart Card's serial number to the VSC Server. The VSC Server rejects any other operations (insert, remove, recover, destroy) with this same serial number until this entire Destroy operation exits. The VSC Server 8 marks a Virtual Smart Card 6 as destroyed. The VSC Server 8 refuses to process any further insert, remove, or recover requests for the destroyed Virtual Smart Card 6.

Virtual Smart Card Internals

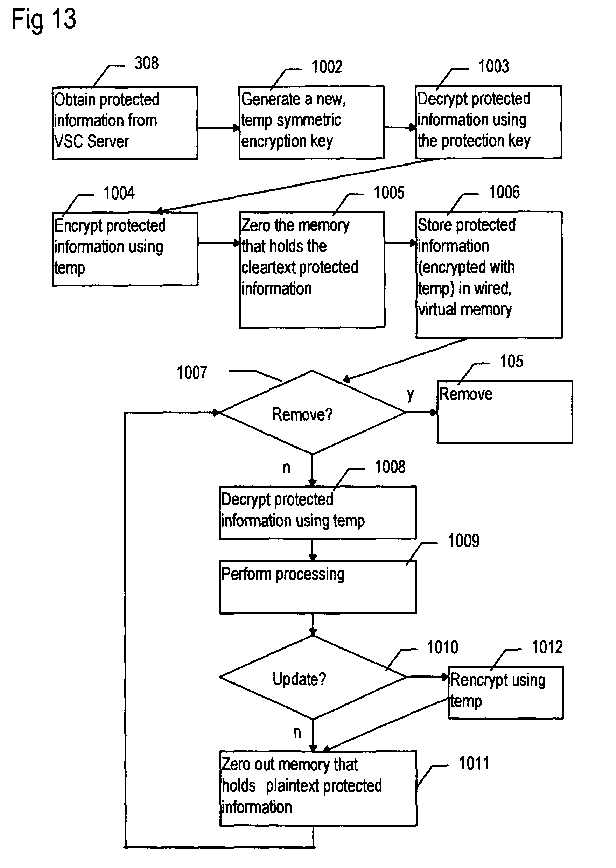

As shown in figure 13 in the enable and download step 308 of the insert operation 104, the Virtual Smart Card 6 obtains protected information. The Virtual Smart Card 6 stores this protected information in a manner that cannot be manipulated or discovered. Even the Virtual Smart Card's owner cannot access the protected information through any vehicle other than the Virtual Smart Card's interface.

Through the protected channel 301, the VSC Server 8 downloads protected information 308 to the Virtual Smart Card 6. The Virtual Smart Card 6 generates 1002 a new, unique symmetric key called temp. The Virtual Smart Card 6 decrypts 1003 the protected information obtained from the VSC Server 8 using the protection key 605 derived from the Virtual Smart Card 6 owner's password 601. The Virtual Smart Card 6 encrypts 1004 the protected information using the temporary 1002 symmetric encryption key. The Virtual Smart Card 6 writes 1005 zeros over the memory that holds the cleartext images of the protected information. The Virtual Smart Card 6 stores 1006 the protected information (encrypted with temp 1002) in wired, virtual memory. The Virtual Smart Card 6 writes zeros over any other locations that store the (encrypted) protected information. If the Virtual Smart Card 6 owner requests 1007 to perform the remove operation 105, then the Virtual Smart Card 6 performs the remove operation 105. Otherwise, if the Virtual Smart Card 6 owner requests processing that uses the protected information, then the Virtual Smart Card 6 decrypts 1008 the protected information and stores the result internally. Next, the Virtual Smart Card 6 performs the requested operation 1009. If the processing did not update the protected information, then the Virtual Smart Card 6 zeros out the plaintext image of the protected information 1011. Otherwise, if the processing updated the protected information, then the Virtual Smart Card 6 encrypts 1012 the new version of the protected information using temp. The Virtual Smart Card 6 overwrites the old version of the protected information.

In the following some modifications are described

Copying

The administrator of the VSC Server 8 can potentially make multiple copies of a single Virtual Smart Card 6. The administrator simply builds entries in its database for new Virtual Smart Cards 6 but copies the same information in each entry.

Implementation not requiring a VSC Server

In Figure 1, the Virtual Smart Card Reader 5 communicates with the VSC Server via the Network. However, one may potentially change the architecture such that the Virtual Smart Card Reader 5 does not communicate with the VSC Server 8 via the Network. Instead, the Smart Card Service Provider 2, the Smart Card Resource Manager 3, the Reader Helper Driver 4, or the Virtual Smart Card Reader Driver 9 could potentially communicate via the VSC Server 8 via the network while providing the same network services as described in the embodiment of the invention.

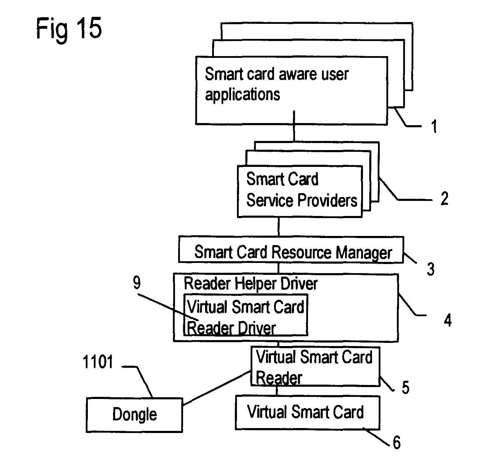

Figure 15 illustrates an alternative implementation of the Virtual Smart Card 6. This implementation does not require a VSC Server 8.

Instead of communicating with the Virtual Smart Card Server 8 the Virtual Smart Card Reader 5 communicates with duplication-protected physical media, e.g., a Dongle 1101. A duplication protected physical media 1101 has the property that it is exceedingly difficult for an unauthorized attacker to construct a copy of the media 1101. The Virtual Smart Card 6 is a copy protected program that executes only if permitted by the Dongle 1101. If the end-user attaches the Dongle 1101 to the machine, then the Virtual Smart Card 6 executes; otherwise, the Virtual Smart Card 6 stops.

The states and state transitions of the Virtual Smart Card 6 are illustrated and described in relation to Figure 4.

> Idle 101: The Virtual Smart Card 6 does not execute. The Virtual Smart Card 6 cannot validate the Dongle 1101. Possibly, the Dongle 1101 is not currently installed.

> In-Use 102: The Virtual Smart Card 6 is executing. The Virtual Smart Card 6 periodically communicates with the attached Dongle 1101 as illustrated and described in relation to Figure 14.

> Destroyed 103: The Dongle 1101 that authorizes a machine's Virtual Smart Card 6 has been destroyed or lost.

The operations of the Virtual Smart Card 6 are described below:

> Insert 104: The end-user attaches the Dongle 1101 and boots the Virtual Smart Card 6 program. The Virtual Smart Card 6 program does not operate unless the Virtual Smart Card 6 program can validate that the Dongle 1101 is present. The state of the Virtual Smart Card 6 is in-use 102 after the Virtual Smart Card 6 detects the Dongle 1101. This state is not explicitly recorded as in the case with the VSC Server 8.

> Remove 105: The Dongle 1101 fails to authorize the Virtual Smart Card 6. For example, the end-user either removes the Dongle 1101, or the Virtual Smart Card 6 shuts down. The state is idle 101 after the Dongle 1101 is removed.

> Recover 106: If the end-user loses his or her Dongle 1101, then the end-user can request a replacement from the Dongle 1101 issuing authority. Presumably, the authority that first placed the encryption key on the Dongle 1101 remembers the Dongle's key. The state is idle 101, once the end-user obtains a new Dongle 1101.

> Destroy 107: The Dongle 1101 is lost or physically destroyed. The state is Destroyed 103 after the Dongle 1101 is physically lost or destroyed.

When the Virtual Smart Card 6 is idle 101, the Dongle 1101 stores the protected information. The Dongle 1101 has two storage locations. The first storage location stores the Dongle 1101 key (see Figure 14) and the second storage location has the protected information.

The protected information is encrypted using a symmetric encryption key called VSC-Key. When the Virtual Smart Card 6 boots, the Virtual Smart Card 6 executes the insert operation. Upon successful completion of the insert operation, the Virtual Smart Card 6 enters the in-use 102 state.

When the Virtual Smart Card 6 is in the in-use 102 state, the Virtual Smart Card 6 obtains protected information. Normally, the Virtual Smart Card 6 stores this protected information on the Dongle 1101 in encrypted form. When the Virtual Smart Card 6 wishes to obtain the protected information, the Virtual Smart Card 6 retrieves the protected information from the Dongle 1101. The Virtual Smart Card 6 uses a Master key to decrypt the protected information. The Master key is hardcoded into the Virtual Smart Card's 6 executable image. The Virtual Smart Card 6 stores its protected information in encrypted, wired memory.

Whereas the present invention has been described with respect to specific embodiments thereof, it is intended to encompass such changes and modifications as fall within the scope of the appended claims.

## Claims

1.  Virtual Smart Card System for data processing networks with sever computers administrating Virtual Smart Card specific records, network connections allowing confidential data exchange and client computers running a secure operating system, processing the following steps;

    -   Virtual Smart Card program sends a insert information to the Virtual Smart Card (VSC) Server;
    -   VSC Server sends protected information to the Virtual Smart Card;
    -   Virtual Smart Card generates a new temporary key;
    -   Virtual Smart Card decrypts the protected information using a owners password;
    -   Virtual Smart Card encrypts the protected information using the temporary key;
    -   Virtual Smart Card operates like a real smart card;
    -   Virtual Smart Card sends a remove information to the Virtual Smart Card Server and erases all protected information of the session.

2.  The Virtual Smart Card System of claim 1 wherein the insert information contain a authentication procedure.

3.  The Virtual Smart Card System of claims 1 to 2 wherein the protected information comprises almost one of the following informations; a private key used for digital signatures, decryption, key management, etc; counters used in software rental applications, and confidential information.

4.  The Virtual Smart Card System of claims 1 to 3 wherein the temporary key is a symmetric key.

5.  The Virtual Smart Card System of claims 1 to 4 wherein the user authentication mechanism augmented with a reader-less authentication device.

6.  The Virtual Smart Card System of claims 1 to 5 wherein the Virtual Smart Card decrypts the protected information if processing as required and re-encrypts the protected information if the processing has modified it.

7.  The Virtual Smart Card System of claims 1 to 6 wherein a recover process can be started if the Virtual Smart Card is lost.

8.  Using of a Virtual Smart Card System of claims 1 to 7 for license and copy protection (LCP).

9.  Using of a Virtual Smart Card System of claims 1 to 7 for Internet authentication.

10. Virtual Smart Card System for data processing facilities with duplication-protected physical media (1101) administrating Virtual Smart Card specific records, connections allowing confidential data exchange and computers running a secure operating system, processing the following steps;

    -   Virtual Smart Card program sends a insert information to the duplication-protected physical media (1101);
    -   duplication-protected physical media (1101) sends protected information to the Virtual Smart Card;
    -   Virtual Smart Card generates a new temporary key;
    -   Virtual Smart Card decrypts the protected information using a owners password;
    -   Virtual Smart Card encrypts the protected information using the temporary key;
    -   Virtual Smart Card operates like a real smart card;
    -   Virtual Smart Card sends a remove information to the duplication-protected physical media (1101) and erases all protected information of the session.

Fig 1

Smart card aware user applications — 1

Smart Card Service Providers — 2

Smart Card Resource Manager — 3

Reader Helper Driver — 4
Virtual Smart Card Reader Driver — 9

VSC Server — 8

Network — 7

Virtual Smart Card Reader — 5

Virtual Smart Card — 6

Fig 2

VSC Server — 8

rm1

Virtual Smart Card — 6

rm1,rm2,hash(rm1,rm2,Master)

## Fig 3

## Fig 4

Fig 5

Virtual Smart Card 1 — 6

VSC Server — 8

net

Virtual Smart Card 2

Virtual Smart Card n — 7

Fig 6

Channel Establishment — 301

Insert request — 309

Authentication — 302    n

y

MUK — 303

Machine Lock — 304

— 305    — 306

mediate    exit

n

y

set state to in-use — 307

Enable and download — 308

## Fig 7

VSC Server

401

VSC private key — 8

r1 — 402

VSC private key

r2,{r1,r2,s1,s2} — 403    VSC Public Key — 404

Virtual Smart Card — 6

## Fig 8

| Provide Virtual Smart Card serial number | — 508 |

Perform user authentication 1 — 501

Perform user authentication n — 502

Perform implementation authentication 1 — 503

Perform implementation authentication m — 504

All authentications successful — 505

Return failure — 506

Return success — 507

Fig 9

```
┌─────────────────────┐
│Enter password       │────── 601
└─────────────────────┘
          │
          ▼
┌─────────────────────┐
│Extract SALT         │────── 602
└─────────────────────┘
          │
          ▼
┌─────────────────────┐
│Compute hash         │
│(MD5) over           │────── 603
│password and SALT    │
└─────────────────────┘
          │
          ▼
┌─────────────────────┐
│Extract              │
│authentication key   │────── 604
│from hash result     │
└─────────────────────┘
          │
          ▼
┌─────────────────────┐
│Extract protection   │
│key from hash result │
│                     │────── 605
└─────────────────────┘
```

Fig 10

```
┌─────────────┐        ┌─── 701        ┌──────────────────┐
│             │     ┌──────┐           │                  │
│VSC Server   │     │ri1   │           │Virtual Smart Card│
│             │─────┴──────┴──────────▶│                  │
│             │                        │        ┌─── 702  │
│             │◀───────────────────────│     ┌──────────┐ │
│             │  ┌──────────────────┐  │     │Master    │ │
│             │  │ri2,hash{ri1,ri2,Master}│  └──────────┘ │
│             │  └──────────────────┘  │                  │
└─────────────┘    │         └── 703   └──────────────────┘
     └── 8         │                          └── 6
                   └── 704
```

## Fig 11

```
┌─────────────────────┐
│Virtual Smart Card   │
│disables itself      │──── 801
└─────────────────────┘
          │
          ▼
┌─────────────────────┐
│Encrypt protected    │
│information using    │──── 803
│Protection Key       │
└─────────────────────┘
          │
          ▼
┌─────────────────────┐
│Upload encrypted     │
│protected            │
│information to VSC   │──── 804
│Server               │
└─────────────────────┘
          │
          ▼
┌─────────────────────┐
│Release local machine│
│lock                 │──── 805
└─────────────────────┘
          │
          ▼
┌─────────────────────┐
│Send remove request  │
│to VSC Server        │──── 806
└─────────────────────┘
          │
          ▼
┌─────────────────────┐
│VSC Server sets the  │
│state of the Virtual │──── 807
│Smart Card to Idle   │
└─────────────────────┘
```

**Fig 12**

Channel Establishment — 301

Recover request — 901

Authentication — 302   n

y

MUK — 303

Machine Lock — 304

902

mediate

n

exit — 306

y

set state to idle — 903

Release machine lock — 904

## Fig 13

308
Obtain protected information from VSC Server

1002
Generate a new, temp symmetric encryption key

1003
Decrypt protected information using the protection key

1004
Encrypt protected information using temp

1005
Zero the memory that holds the cleartext protected information

1006
Store protected information (encrypted with temp) in wired, virtual memory

1007
Remove?

y

105
Remove

n

1008
Decrypt protected information using temp

1009
Perform processing

1010
Update?

1012
Rencrypt using temp

n

1011
Zero out memory that holds plaintext protected information

Fig 14

Generate Random Numbers — 1201

Create table of Dongle- encrypted random numbers — 1202

1203

| | |
|---|---|
| 23928 | 90873 |
| 98709 | 98199 |
| 89766 | 09876 |
| 76544 | 87904 |
| 12435 | 98709 |
| 18230 | 13823 |

1204 — Encode the table into software to be copy protected

Distribute the copy protected software to anend-use — 1205

Randomly choose a value from the table — 1206

Send the value to the Dongle — 1207

Receive encrypted response — 1208

1209 — Equal? — no — Stop Program — 1210

yes

Continue with program — 1211

## Fig 15

| Smart card aware user applications | 1 |
|---|---|

| Smart Card Service Providers | 2 |

| Smart Card Resource Manager | 3 |

Reader Helper Driver — 4

9 → Virtual Smart Card Reader Driver

Virtual Smart Card Reader — 5

1101 → Dongle

Virtual Smart Card — 6

**European Patent Office**

**EUROPEAN SEARCH REPORT**

Application Number

EP 98 71 0001

## DOCUMENTS CONSIDERED TO BE RELEVANT

| Category | Citation of document with indication. where appropriate, of relevant passages | Relevant to claim | CLASSIFICATION OF THE APPLICATION (Int.Cl.6) |
|---|---|---|---|
| A | WO 97 21162 A (NORTHERN TELECOM LTD) 12 June 1997 * the whole document * | 1-10 | G06F 1/00 |
| A | EP 0 752 635 A (SUN MICROSYSTEMS INC) 8 January 1997 * the whole document * | 1-10 | |
| A | WO 96 41445 A (SPYRUS INC) 19 December 1996 * the whole document * | 1-10 | |
| A | US 5 590 199 A (KRAJEWSKI JR MARJAN ET AL) 31 December 1996 * abstract; figure 5 * * column 3, line 41 - column 4, line 42 * | 1-10 | |
| A | US 5 191 611 A (LANG GERALD S) 2 March 1993 * the whole document * | 1-10 | |
| A | WO 95 12169 A (VISA INT SERVICE ASS) 4 May 1995 | | TECHNICAL FIELDS SEARCHED (Int.Cl.6) G06F |
| A | EP 0 561 685 A (FUJITSU LTD) 22 September 1993 | | |

The present search report has been drawn up for all claims

| Place of search | Date of completion of the search | Examiner |
|---|---|---|
| THE HAGUE | 5 November 1998 | Powell, D |

EPO FORM 1503 03.82 (P04C01)